## Europäisches Patentamt
## European Patent Office
## Office européen des brevets

(11) Publication number: **0 072 700**
**B1**

(12) **EUROPEAN PATENT SPECIFICATION**

(45) Date of publication of patent specification: **11.11.87**

(51) Int. Cl.⁴: **G 01 J 3/28, G 02 F 1/33**

(21) Application number: **82304334.4**

(22) Date of filing: **17.08.82**

(54) Light spectrum analyser.

(30) Priority: **17.08.81 JP 127689/81**
**20.01.82 JP 7207/82**
**20.01.82 JP 7208/82**

(43) Date of publication of application:
**23.02.83 Bulletin 83/08**

(45) Publication of the grant of the patent:
**11.11.87 Bulletin 87/46**

(84) Designated Contracting States:
**DE FR GB SE**

(56) References cited:

**JAPANESE JOURNAL OF APPLIED PHYSICS,
Vol.19, Supplement 19-1, 1980, Tokyo C.S.
TSAI "Integrated Acoustooptical Circuits for
Real-Time Wideband Signal Processing", pages
661 to 665**

**IEEE JOURNAL OF QUANTUM ELECTRONICS,
Vol. 14, No.6, 1978; J.T. BOYD et al. "Effect of
Waveguide Optical Scattering on the
Integrated Optical Spectrum Analyzer Dynamic
Range", pages 437 to 443**

(73) Proprietor: **SUMITOMO ELECTRIC INDUSTRIES
LIMITED**
**No. 15, Kitahama 5-chome Higashi-ku
Osaka-shi Osaka 541 (JP)**

(72) Inventor: **Nishiwaki, Yoshikazu c/o Osaka
Works of**
**Sumitomo Electric Ind. Ltd. 1-3 Shimaya 1-
chome**
**Konohana-ku Osaka (JP)**
Inventor: **Nishiura, Yozo c/o Osaka Works of
Sumitomo Electric Ind. Ltd. 1-3 Shimaya 1-
chome**
**Konohana-ku Osaka (JP)**

(74) Representative: **Rackham, Stephen Neil et al
GILL JENNINGS & EVERY 53-64 Chancery Lane
London WC2A 1HN (GB)**

## Description

The Japanese Journal of Applied Physics Vol 19, supplement 19-1, 1980, Tokyo in an article entitled "Integrated Acousto-optical Circuits for Real-Time Wideband Signal Processing" by C. S. Tsai on page 661—665 describes a selective review on the progress for the realisation of integrated acousto-optical circuits and some of the potential application of such acousto-optical circuits in real time wide band signal processing. The accordance with this invention this paper indicates the desirability of being able to produce a totally integrated light spectrum analyser and points out that such a circuit would require integration of all active and passive optical components onto a single substrate. The article suggests the use of an AlGaAs multilayer structure as a potential substrate for such a circuit and points out that such a substrate would enable a light source to be manufactured but also points out that the other passive and active components required for such a monolithic module remain to be developed. The paper also suggests that thermally oxidised silicon and lithium niobate are the two most promising substrates for the implementation of such a hybrid module and suggests that a separately formed laser diode and photodetector array be butt coupled to the edges of such a lithium niobate substrate.

A further paper in the IEEE Journal of Quantum Electronics, Volume 14, no. 6, 1978 by J. T. Boyd et al entiteld "Effective Waveguide Optical Scattering on the Integrated Optical Spectrum Analyser Dynamic Range" which appears between pages 437 and 443 postulates a technique for estimating the scattering that would take place in an integrated optical spectrum analyser. This paper postulates a possible structure for such a light spectrum analyser including a charge coupled device imaging array which is taper coupled with the waveguide.

The light spectrum analysers proposed in these two papers and those previously known include a waveguide layer having monolithically integrated into it a light dispersing zone which exhibits a piezo-electric effect and which includes means for exciting surface acoustic waves, the means, when subjected to an oscillating electrical signal, producing a surface acoustic wave propagating in a direction transverse to an incident light beam passing along the waveguide layer to defract it, and a light detecting reception zone downstream of the light dispersion zone to detect the diffracted light. In the past the light function zone and the light reception zones have, in practice, been formed separately on different substrates and, in view of this, it is difficult accurately to adjust their optical axes so that assembly the device is difficult and its reliability is low. Scattering of light occurs between the two zones and this causes a loss in the emission of the light and an increase in noise.

According to this invention in such a light spectrum analyser the light detecting reception zone includes at least two electrodes located to provide a current path through the waveguide layer in a direction transverse to the incident light beam, and the waveguide layer is formed from a material exhibiting a piezo-electric effect and being capable of supporting a surface accoustic wave, and exhibiting a photoconductive effect so that the passage of light through the waveguide causes a change in a current flowing between the electrodes.

Three examples of a light spectrum analyser in accordance with the present invention will now be described and contrasted with the prior art, with reference to the accompanying drawings; in which:—

Figure 1 is a perspective view of a conventional light spectrum analyser;

Figure 2 is a perspective view of a first example of a light spectrum analyser according to the present invention;

Figure 3 is a section through the light reception zone of the light spectrum analyser of Figure 2 to show the operation of the electrodes;

Figure 4 is a perspective view of a second example of a light spectrum analyser according to the present invention;

Figure 5 is a section through the light reception zone of the light spectrum analyser of Figure 4 to show the operation of the electrodes;

Figure 6 is a perspective view of a third embodiment of a light spectrum analyser of the present invention;

Figure 7 is a view explanatory of a procedure in which the light spectrum analyser in Figure 6 is made by epitaxial growth;

Figure 8 is a representation of a procedure in which a zone to be used as the light receiving zone is manufactured by epitaxial growth; and,

Figure 9 is an explanatory view of a procedure in which the circuit is fabricated by varying and diffusing the composition of the waveguide area and the light reception zone.

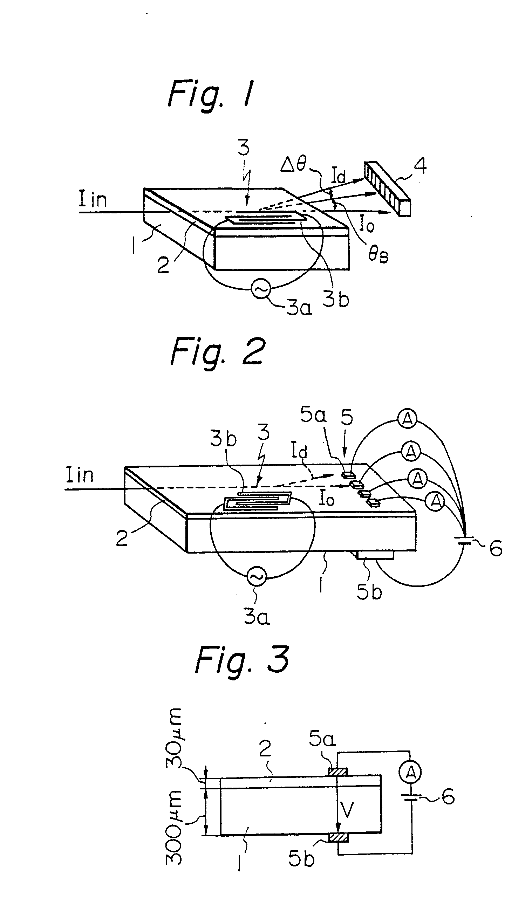

Figure 1 shows an existing spectrum analyser for electric signals which makes use of light, a light wave guide layer (2) is formed on a substrate (1). An acoustic optical element as a light function element 3 which makes use of a piezo electric effect is provided on the light wave guide layer 2 on the substrate 1 and in the travel path of light.

A transducer 3b connected to a power source 3a generates distortion in the light wave guide layer 2 due to a piezo-electric effect. This distortion propagates through the wave guide layer 2 as ultrasonic wave involving a change in refractive index of the layer 2. An incident light $I_{in}$ passes through this zone to produce a diffracted light $I_d$ due to an acoustic optical element. On the other hand, the diffracted light is received by an image sensor 4 on another substrate (not shown) separate from the light wave guide layer 2.

A disadvantage derived from such arrangement is that it is difficult to accurately adjust optical axes of the light wave guide layer 2 and the image sensor 4 since they are separately formed, their assembly is difficult and their reliability is low. Depending upon how light is emitted from the light wave guide layer 2, a scattering and a coupling loss may be caused, thereby incurring a loss of emission and an increase of noise. With the image sensor 4 in which the array is linear and perpendicular to the optical axis, with a greater diffraction angle $\theta_B + \Delta\theta$ a greater distance of propagation is obtained. The greater the distance of propagation the more the beam is subjected to diffusion thereby lowering the S/N ratio in the presence of noise.

Now, Figure 2 shows an example of a light spectrum analyser according to the present invention. A light wave guide layer 2 having a piezo-electric effect and a photoconductive effect is formed on a substrate 1. Light is incident from one side to the other side of the wave guide layer 2. An ultrasonic transducer 3b which serves as a light function zone 3 is disposed in the light wave guide layer 2 and in the travel path of light. A power source 3a is connected to the ultrasonic transducer 3b. This ultrasonic transducer 3b is adapted to propagate ultrasonic waves to the light wave guide layer 2 by a piezo-electric effect to subject the light wave guide layer 2 to change in refractive index and to diffract an incident light $I_{in}$.

Electrodes 5a, 5b as a light reception zone 5 are formed behind the travel path of light in the ultrasonic transducer 3b and in positions where the light wave guide layer 2 is held therebetween, that is, the top of the guide layer 2 and the underside of the substrate 1. Due to the light wave guide layer 2 of material having a photoconductive effect, when voltage from the power source 6 is applied between the electrodes 5a, 5b, the light wave guide layer 2 between the electrodes 5a, 5b through which light passes is susceptible to energization of current to detect difference in current between the other electrodes 5a, 5b. The electrodes 5a, 5b as the light reception zone 5 are shown in Fig. 2 as being formed on the top of the guide layer 2 and the underside of the substrate 1, they may be provided on the top of the guide layer, and between the guide layer and the substrate. Although the electrodes 5a are present in plural number and the electrode 5b is in the form of a single plate, at least either of the electrode 5a or 5b may be in plural number to this end.

Further, the electrodes 5a, 5b are shown in Fig. 2 as being linearly arranged perpendicular to the optical axis, they may be disposed in the form of circular arc by taking uniform diffusion of the diffracted beam into account as it does not necessarily follow that they should be linear. In this manner, the current drained between the opposed electrodes 5a, 5b is measured by an ammeter A to thus detect the quantity of light passing between the opposed electrodes 5a, 5b, that is, the diffracted light derived from the ultrasonic wave emitted from the ultrasonic transducer 3b.

The electrodes 5a, 5b may be fabricated simultaneously with the ultrasonic transducer 3b and the light wave guide layer 2 on the substrate 1 by an IC manufacturing process for photolithography and the like.

As described in the preferred embodiment, according to the present invention, the light function zone and the reception zone are simultaneously made by the conventional IC manufacturing process so that the location of these parts may be secured relative to each other to eliminate difficulty involved by adjustment of the optical axis in assembling and avoid deterioration of dependability. Further, since no light is emitted by passing out of the light wave guide layer, both loss and noise are minimized. In addition, any arrangement of the electrodes as the light reception zone may be made without any difficulty. For example, if a diffraction angle is widened, it is enough to have the electrodes close to the side of the light source so that any noise derived from diffusion of light beam may be minimized.

The optical integrated circuit shown in Fig. 2 is, however, adapted so that the light reception zone forms a structure which comprises the electrodes 5a in the array on the top of the light wave guide path 2, and the opposed electrodes 5b disposed facing the other electrodes with the guide path 2 and the substrate 1 therebetween. With this arrangement, a portion of voltage applied from the external power source 6 is also drained to the substrate 1. Thus, little change is caused in current applied to the external circuit between the cases where light is passed and not passed.

Fig. 3 is a representation explanatory of the optical integrated circuit shown in Fig. 2. Both or either of gallium Ga and calcium Ca are doped in the substrate formed of bismuth silicon oxide $Bi_{12}SiO_{20}$ (hereinafter referred to as "BSO"), and the electrodes 5a, 5b are formed to face each other on the top of light wave guide path 2 which has been epitaxially grown up and on the underside of the substrate 1. When light passes through the light wave guide path 2 right under the electrodes 5a with voltage V being applied by the power source 6 between the electrodes 5a and 5b, resistance value is lowered by the photoconductive effect of the light wave guide path 2 to subject the current applied to the external circuit to a change. Now, specific resistances of the substrate 1 and the guide path 2, and specific resistance of the guide path 2 when light is emitted are expressed by $\rho$, $\rho_1$ and $\rho_2$ whereas the thickness of the substrate 1 and the guide path 2 are expressed by 300 μm and 30 μm, the respective current $I_1$, $I_2$ applied through the electrodes 5a to the external circuit between the cases where light is passed and not passed, may be obtained from the following equation, when either light passes right under the electrodes 5a or does not pass.

$$I_1 = \frac{V}{300\rho + 30\rho_1} \; ; \; I_2 = \frac{V}{300\rho + 30\rho_2} \tag{1}$$

When the respective specific resistances are put as

$$\rho_1 = \rho; \quad \rho_2 = \frac{\rho_1}{a}$$

(where a is a constant), changes in current applied to the external circuit between the cases where light is passed and not passed may be obtained by the following equations.

$$(I_1/I_2)A = \frac{300\rho + 30\rho_2}{300\rho + 30\rho_1}$$

$$= \frac{10\rho + \dfrac{\rho}{a}}{11\rho} = \frac{10}{11} + \frac{1}{11a} \tag{2}$$

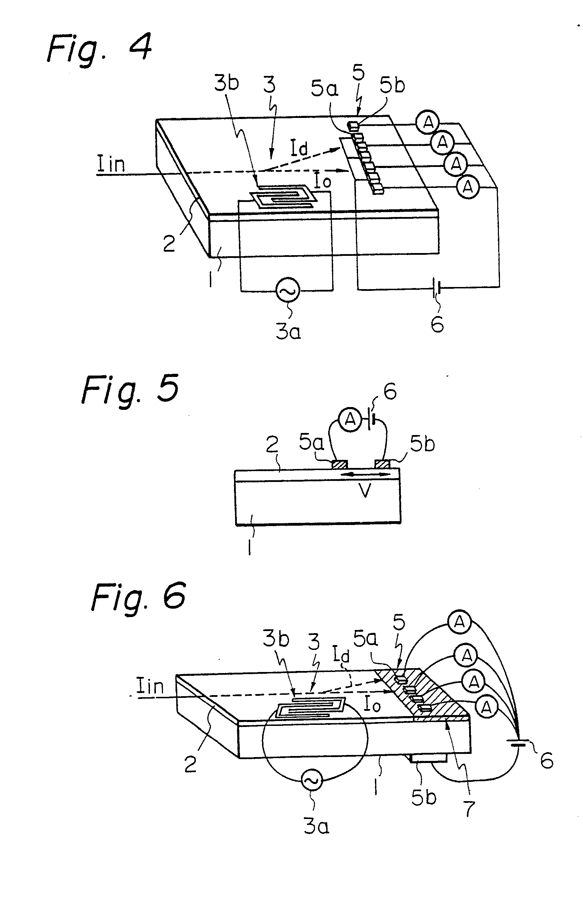

Figure 4 is a view showing another embodiment of an optical integrated circuit of the present invention, wherein like numerals 1—6 are used to designate like parts in Fig. 2. The electrodes in array are made by the conventional IC manufacturing process such as photolithographic process and the like. These electrodes are arranged so that current applied to the respective electrodes may be detected by the ammeter A in such a manner that a set of the electrodes in even numbers and another set of the electrodes in odd numbers are maintained to render potential equivalent when the electrodes are numbered from the end of arrays. The quantity and location of light may be detected due to change in current applied to the external circuit between the cases where light passes through the light wave guide path between the electrodes 5a and 5b and light does not pass.

Fig. 5 is a view explanatory of an optical integrated circuit in Fig. 4. The electrodes 5a, 5b are disposed to face each other to apply voltage V between the electrodes 5a, 5b. In this instance, when the distance between the electrodes 5a and 5b is short enough as compared with the thickness of the guide path 2, voltage is considered as being applied to only the area of the guide path 2, where currents $I_1$, $I_2$ are expressed by means of the following equation:

$$I_1\alpha\frac{V}{\rho_1}; \quad I_2\alpha\frac{V}{\rho_2}$$

$$(I_1/I_2)B = \frac{\rho_2}{\rho_1}$$

$$= \frac{1}{a} \quad \text{(wherein a is a constant)}$$

Specific resistance $\rho_1$ of the BSO substrate 1 in which gallium Ga and calcium Ca are doped, and specific resistance $\rho_2$ thereof when irradiated by light in wave length 400 nm, with strength of 0.3 mW/cm$^2$ may be put as

$$\rho_1 = 10^{12}(\Omega \cdot cm); \quad \rho_2 = 10^8 \ (\Omega \cdot cm)$$

therefore,

$$a = \rho_1/\rho_2 = 10^4$$

Thus changes in current according to the first example between the cases where light is passed and not passed, are

$$(I_1/I_2)A = \frac{10}{11} + \frac{1}{11 \times 10^4} \approx 0.90$$

In contrast, changes in current according to the second example are

$$(I_1/I_2)B = \frac{1}{10^4} = 0.0001$$

to remarkably improve light receiving sensitivity.

As set forth hereinafter, an advantage derived from the optical integrated circuit in Fig. 4 is that great change in current drained to the external circuit between the cases where light is passed and not passed are obtained to improve light receiving sensitivity since a major portion of the electric field is applied within the light wave guide path.

For further improvement on the light receiving sensitivity, more change in composition of the light reception zone than that of the light wave guide path develops a photoconductive effect. On the other hand, for further developement of photoconductive effect of the light reception zone, changes in variety or denisty of impurity in a zone to be light received are made with respect to a zone to be a wave guide path when the light wave guide path is formed by an epitaxial growth or a diffusion and the like.

The optical integrated circuit in Fig. 4 has however proposed to provide the light wave guide path 2 having the same characteristics as those of the light function zone 3 and the light reception zone 5. In general, a photoconductive effect is derived from absorption of light so that material with a great photoconductive effect presents problems such as a great propagation loss. Although a layer in which either or both of gallium Ga and calcium Ca is doped and epitaxially grown on BSO has higher refractive index with respect to the substrate, its photoconductive effect is weakened (little change is shown for light of 500 mn—600 nm) as compared with that of non-doped BSO (irradiation of light with 0.3 W/cm$^2$ in wave length of 500 nm to dark resistance of $10^{12}$ $\Omega \cdot$ cm to reduce the latter to $10^9$ $\Omega \cdot$ cm). Much effect is not expected even if the light wave guide path in itself is used as the light reception zone which utilizes a photoconductive effect.

Fig. 6 is a representation of still another embodiment of the optical integrated circuit of the present invention, wherein numerals 1—6 are used to designate the same parts in Fig. 1. Numeral 7 designates a layer formed of a medium with a higher photoconductive effect. In a process for making the light wave guide path 2 by way of epitaxial growth, metal diffusion or ion implantation in order to subject only a portion of the guide path used as the light reception zone 5 to a marked photoconductive effect, variations are made in formation in selection and density of dopant (including non-dopant) of the epitaxial layer or of diffusion (or ion implantation) material.

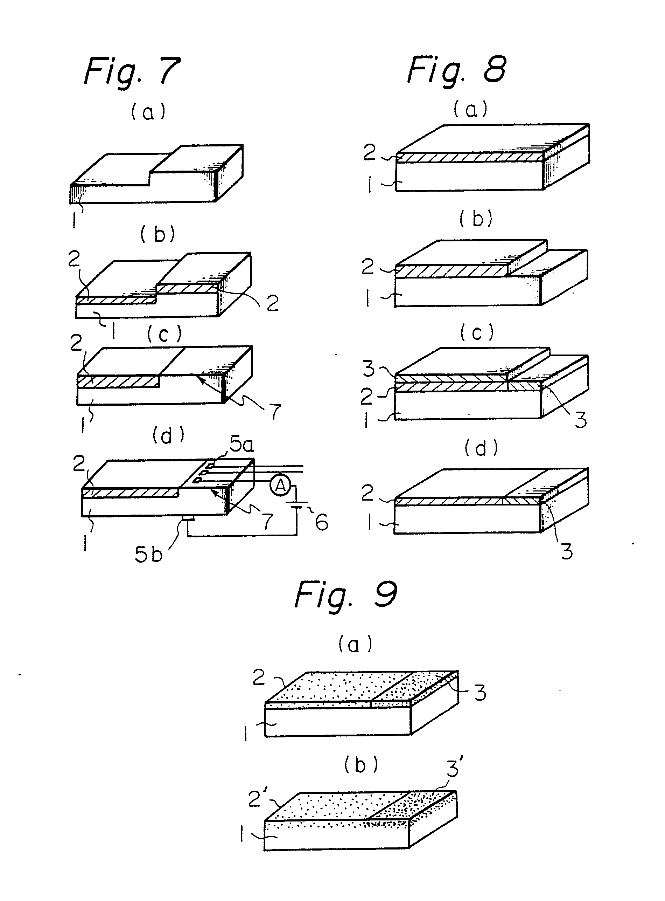

Fig. 7 is a view showing the procedure by which the optical integrated circuit in Fig. 6 is made by epitaxial growth. As shown in Fig. 7(a), the BSO substrate 1 is etched to leave some portion thereof as it is. Then, the whole surface of the etched portion of the substrate is doped with gallium Ga, calcium Ca and the like for epitaxial growth to a partially crowned Ga, Ca doped BSO epitaxial layer 2, as shown in Fig. 7(b). Only this undesirable partially crowned epitaxial layer 2 is etched to expose the surface of the original BSO substrate 1, as shown in Fig. 7(c). The light receiving electrodes 5a, 5b are formed in the light reception zone 7 of the BSO substrate, as shown in Fig. 7(d) to detect the location of the waveguide light so that a higher photoconductive effect of non-dope BSO with a higher sensitivity is applied to the light reception zone. With the thickness of the BSO substrate being ignored, the light receiving sensitivity of the present invention is increased up to 100 times or more as compared with the conventional optical integrated circuit.

Fig. 8 is a representation of a procedure in which an area which is used as the light receiving zone is also formed by epitaxial growth. Fig. 9 is a view showing the procedure by which the circuit is fabricated by varying and diffusing composition of the waveguide area and the light reception zone. According to the epitaxial growth, the circuit may be manufactured by the following steps which may be taken: a) to prepare the epitaxial layer which is used as the waveguide path on the desired surface of the BSO substrate 1; b) to remove only the epitaxial layer in the area to be used as the light receiving zone by a wet etching relying on an ion etching or an acid and the like; c) to grow the epitaxial layer of composition to be used as the light reception zone on the same surface, and d) to remove only the portion that grows upwardly of the epitaxial layer 2 out of the other epitaxial layer 3. According to the diffusion procedure, the circuit may be fabricated by the following steps which may be taken; a) to prepare by vacuum evaporation or sputtering, the thin layers 2 and 3 of different metal materials and the like which vary in amount, in the area to be used as the waveguide path on the desired surface of the BSO substrate 1, and b) to heat material for the thin layers 2, 3 at a high temperature to diffuse it within the substrate 1 to vary its composition in the waveguide path 2' and the light reception zone 3'.

An advantage derived from the optical integrated circuit in Fig. 6 is that only the photoconductive effect of the light reception zone is improved to thus develop a light receiving sensitivity to the light function zone without affecting propagation loss.

## Claims

1. A light spectrum analyser comprising a waveguide layer (2) of piezoelectric material having monolithically integrated into it a light dispersing zone (3) which includes means (3b) for exciting surface acoustic waves, the means (3b), when subjected to an oscillating electrical signal, producing a surface acoustic wave propagating in a direction transverse to an incident light beam passing along the waveguide layer (2) to diffract it, and a light detecting reception zone downstream of the light dispersion zone (3) to detect the diffracted light, characterised in that the light detecting reception zone includes at least two electrodes (5) located to provide a current path through the waveguide layer (2) in a direction transverse to the incident light beam, and in that the waveguide layer (2) is formed from a material exhibiting a

5

photoconductive effect so that the passage of light through the waveguide causes a change in a current flowing between the electrodes (5).

2. A light spectrum analyser according to claim 1, in which the at least two electrodes (5a, 5b) are located one above and one below the waveguide layer (2) with a power source (6) and means to measure current (A) connected between the electrodes (5a, 5b) to define a current path through the waveguide layer (2).

3. A light spectrum analyser according to claim 1, in which the at least two electrodes (5) are formed by an array of electrodes (5a, 5b) located side-by-side on one side of the waveguide layer (2) with a power source (6) and means to measure current (A) connected between adjacent pairs of electrodes (5a, 5b), so that a current path is established in the waveguide layer (2) between the electrodes (5a, 5b).

4. A light spectrum analyser according to any one of the preceding claims, in which the waveguide layer (2) in the light reception zone (5) has a greater specific conductivity than in the light dispersion zone (3).

5. A light spectrum analyser according to claim 4, in which the waveguide layer (2) is formed by epitaxial growth and in which the waveguide layer (2) in the light reception zone (5) is doped differently to that in the light dispersion zone (3).

6. A light spectrum analyser according to claim 4, in which the waveguide layer (2) in the light reception zone (5) is doped by diffusion.

7. A light spectrum analyser according to claim 4, in which the light dispersion zone (3) is formed by epitaxial growth or by metal diffusion, the substantially undoped substrate (1) forming the light reception zone (5).

8. A light spectrum analyser according to any one of the preceding claims, in which the waveguide layer (2) is formed from $Bi_{12}SiO_{20}$.

**Patentansprüche**

1. Lichtspektrumanalysator mit einer aus piezoelektrischem Material bestehenden Wellenführungsschicht (2), innerhalb welcher eine monolithisch integrierte Lichtdispersionszone (3) vorgesehen ist, wobei innerhalb derselben ein Element (3b) zur Erregung von oberflächenakustischen Wellen und einem Element (3b) zur Erzeugung einer oberflächenakustischen Welle quer zu dem entlang der Lichtführungsschicht (2) verlaufenden Lichtstrahl im Hindblick auf eine Defraktion auftritt, sobald ein oszillierendes elektrisches Signal vorhanden ist, während stromabwärts von der Lichtdispersionszone (3) eine Lichtempfangs- und Detektorzone vorgesehen ist, im auf diese Weise das reflektierte Licht festzustellen, dadurch gekennzeichnet, daß die Lichtdetektor- und Empfangszone wenigstens drei Elektroden (5) aufweist, welche einen Strompfad durch die Lichtwellenschicht (2) quer zu dem einfallenden Lichtstrahl ergeben, und daß die Lichtwellenschicht (2) aus einem einen photoleitfähigen Effekt aufweisenden Material besteht, so daß bei Lichtdurchgang durch den Wellenleiter eine Stromänderung zwischen den Elektroden (5) zustande kommt.

2. Lichtspektrumanalysator nach Anspruch 1, dadurch gekennzeichnet, daß von den beiden Elektroden (5a, 5b) die eine oberhalb und die andere unterhalb der Wellenleiterschicht (2) angeordnet sind, und daß an diesen beiden einen Strompfad durch die Wellenleiterschicht (2) festlegenden Elektroden (5a, 5b) eine Stromquelle (6) und ein Strommeßgerät (A) angeschlossen sind.

3. Lichtspektrumanalysator nach Anspruch 1, dadurch gekennzeichnet, daß die beiden Elektroden (5) durch eine Elektrodenanordnung (5a, 5b) gebildet sind, welche auf einer Seite der Wellenleiterschicht nebeneinander angeordnet sind, wobei zwischen nebeneinanderliegenden Paaren von Elektroden (5a, 5b) eine Stromquelle (6) und ein Strommeßgerät (A) angeschlossen sind, so daß der innerhalb der Wellenleiterschicht (2) zwischen der Elektroden (5a, 5b) ein Strompfad gebildet ist.

4. Lichtspektrumanalysator nach einem der vorhergehenden Ansprüche, dadurch gekennzeichnet, daß die Wellenleiterschicht (2) im Bereich der Lichtempfangszone (5) eine größere spezifische Leitfähigkeit besitzt als in der Lichtdispersionszone (3).

5. Lichtspektrumanalysator nach Anspruch 4, dadurch gekennzeichnet, daß die Lichtleiterschicht (2) durch epitaxiales Wachstum gebildet ist, wobei die Lichtleiterschicht (2) im Bereich der Lichtempfangszone (5) eine unterschiedliche Dotierung als in der Lichtdispersionszone (3) aufweist.

6. Lichtspektrumanalysator nach Anspruch 4, dadurch gekennzeichnet, daß die Lichtleiterschicht (2) innerhalb der Lichttempfangszone (5) durch Diffusionsdotierung hergestellt ist.

7. Lichtspektrumanalysator nach Anspruch 4, dadurch gekennzeichnet, daß die Lichtdispersionszone (3) durch epitaxiales Wachstum oder durch Metalldiffusion erzeugt ist, wobei das im wesentlichen nicht gedoptes Substrat (1) die Lichtempfangszone (5) bildet.

8. Lichtspektrumanalysator nach einem der vorhergehenden Ansprüche, dadurch gekennzeichnet, daß die Wellenleiterschicht (2) durch $Bi_{12}SiO_{20}$ gebildet ist.

**Revendications**

1. Analyseur de spectres de lumière comprenant une couche de guide d'onde (2) en un matériau piézoélectrique où est monolithiquement intégrée une zone (3) de dispersion de la lumière qui contient un

**0 072 700**

moyen (3b) pour exciter des ondes acoustiques de surface, le moyen (3b), lorsqu'il est soumis à un signal électrique oscillant, produisant une onde acoustique de surface se propageant dans une direction transversale à un faisceau de lumière incidente traversant le long de la couche de guide d'onde (2) pour la diffracter, et une zone de réception de détection de la lumière en aval de la zone de dispersion de la lumière (3) pour détecter la lumière diffractée, caractérisé en ce que la zone de réception de détection de la lumière comprend au moins deux électrodes (5) placées pour produire un trajet de courant à travers la couche de guide d'onde (2) dans une direction transversale au faisceau de lumière incidente, et en ce que la couche de guide d'onde (2) est formée en un matériau présentant un effet photoconducteur de manière que le passage de la lumière à travers le guide d'onde provoque un changement d'un courant s'écoulant entre les électrodes (5).

2. Analyseur de spectres de lumière selon la revendication 1, où les au moins deux électrodes (5a, 5b) sont placées l'une au-dessus et l'autre en dessous de la couche de guide d'onde (2) avec une source de courant (6) et un moyen (A) pour mesurer le courant connectés entre les électrodes (5a, 5b) pour définir un trajet de courant à travers la couche de guide d'onde (2).

3. Analyseur de spectres de lumière selon la revendication 1, où les au moins deux électrodes (5) sont formées d'une série d'électrodes (5a, 5b) placées côte à côte de la couche de guide d'onde (2) avec une source de courant (6) et un moyen pour mesurer le courant (A) connectés entre des paires adjacentes d'électrodes (5a, 5b) de manière qu'un trajet de courant soit établi dans la couche de guide d'onde (2) entre les électrodes (5a, 5b).

4. Analyseur de spectres de lumière selon l'une quelconque des revendications précédentes, où la couche de guide d'onde (2) dans la zone (5) de réception de la lumière a une plus grande conductivité spécifique que dans la zone de dispersion de la lumière (3).

5. Analyseur de spectres de lumière selon la revendication 4, où la couche de guide d'onde (2) est formée par croissance épitaxiée et où la couche de guide d'onde (2) dans la zone (5) de réception de la lumière est dopée différemment de la zone (3) de dispersion de la lumière.

6. Analyseur de spectres de lumière selon la revendication 4, où la couche de guide d'onde (2) dans la zone de réception de la lumière (5) est dopée par diffusion.

7. Analyseur de spectres de lumière selon la revendication 4, où la zone de dispersion de la lumière (3) est formée par croissance épitaxiée ou par diffusion de métal, le substrat sensiblement non dopé (1) formant la zone de réception de la lumière.

8. Analyseur de spectres de lumière selon l'une quelconque des revendications précédentes, où la couche de guide d'onde (2) est formée en $Bi_{12}SiO_{20}$.

7

Fig. 1

Fig. 2

Fig. 3

# Fig. 4

$I_{in}$

$I_d$

$I_o$

3b 3 5a 5 5b

2

1

3a

6

# Fig. 5

6

2 5a 5b

V

1

# Fig. 6

3b 3 $I_d$ 5a 5

$I_{in}$

$I_o$

2

1

3a

5b 7

6

*Fig. 7*

( a )

( b )

( c )

( d )

*Fig. 8*

( a )

( b )

( c )

( d )

*Fig. 9*

( a )

( b )